# EUROPÄISCHE PATENTSCHRIFT

(11) **EP 0 269 055 B1**
(45) Veröffentlichungstag und Bekanntmachung des Hinweises auf die Patenterteilung: **24.02.1993**
(21) Anmeldenummer: 87117267.2
(22) Anmeldetag: 24.11.1987
(51) Int. Cl.: H04B 3/03

(54) **Electronische Gabelschaltung**
Electronic hybrid circuit
Circuit hybride électronique

(30) Priorität: 25.11.1986 DE 3640127
(43) Veröffentlichungstag der Anmeldung: 01.06.1988
(73) Patentinhaber: Alcatel SEL Aktiengesellschaft, D-70435 Stuttgart (DE); ALCATEL N.V., NL-1077 XX Amsterdam (NL)
(72) Erfinder: Meschkat, Peter, D-7050 Waiblingen (DE); Zanzig, Jürgen, D-7252 Weil der Stadt (DE)
(74) Vertreter: Brose, Gerhard, Dipl.-Ing.

(56) Entgegenhaltungen:
- EP-A- 0 171 692
- DE-A- 3 115 892
- GB-A- 2 050 774
- PATENT ABSTRACTS OF JAPAN, Band 10, Nr. 289 (E-442)[2345], 2. Oktober 1986 & JP-A-61 108 231

## Beschreibung

Die Erfindung betrifft eine analoge elektronische Gabelschaltung nach dem Oberbegriff des Hauptanspruchs.

Eine Gabelschaltung, welche die im Oberbegriff des Hauptanspruchs genannten Merkmale aufweist, ist aus der DE-OS 34 28 106 bekannt.

Diese Gabelschaltung wird durch die vorliegende Erfindung, entsprechend der Lehre des Hauptanspruchs, weiterentwickelt. Weitere Ausgestaltungen der Erfindung sind den abhängigen Ansprüchen zu entnehmen.

Durch die Erfindung wird eine analoge elektronische Gabelschaltung mit komplexem Innenwiderstand und Übertragerkopplung zur Verfügung gestellt. Die Verlustwiderstände des Übertragers werden zusammen mit einem Meßwiderstand zur Bildung des komplexen Innenwiderstands, der gleichzeitig eine komplexe Nachbildung darstellt, mit herangezogen.

Es wird auch eine Ausführungsform beschrieben, bei der sich nichtideale Eigenschaften des Übertragers (Nichtlinearitäten, parasitäre Elemente) nur sehr wenig auswirken, weil dieser innerhalb einer Rückkoppelschleife liegt.

Im folgenden wird die Erfindung anhand von Ausführungsbeispielen unter Zuhilfenahme der beiliegenden Zeichnungen weiter erläutert.
- Figur 1: zeigt in vereinfachter Darstellung eine erfindungsgemäße Gabelschaltung.
- Figur 2a und 2b: zeigen je eine komplexe Impedanz.
- Figur 3: zeigt den Aufbau einer steuerbaren Stromquelle.
- Figur 4: zeigt ein weiteres Ausführungsbeispiel einer erfindungsgemäßen Gabelschaltung.

Die Beschreibung der vorliegenden Erfindung erfolgt in Anlehnung an die eingangs genannte DE-OS 34 28 106. Das Verständnis der dort beschriebenen Schaltung wird als bekannt vorausgesetzt. Für übereinstimmende Funktionen wurden auch übereinstimmende Bezugszeichen verwendet.

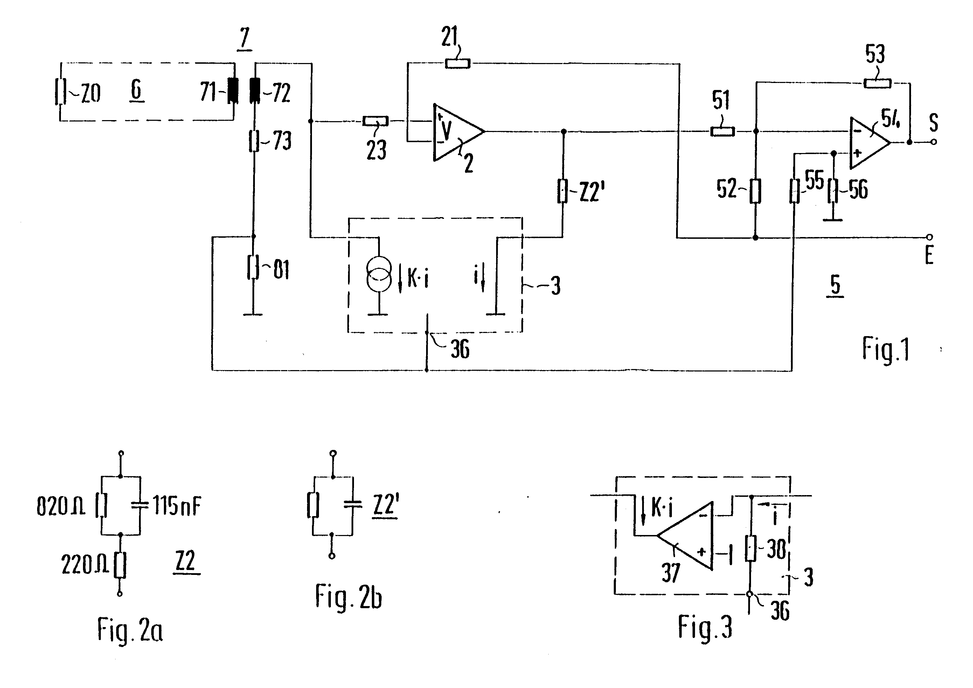

Figur 1 zeigt eine Gabelschaltung, die mittels eines Übertragers 7 an eine Zweidrahtleitung 6 angeschlossen ist, die an ihrem fernen Ende mit einer komplexen Impedanz Z0 abgeschlossen ist. Eine Funktion der Gabelschaltung besteht nun darin, die Zweidrahtleitung 6 mit einer komplexen Impedanz Z2 abzuschließen. Die komplexen Impedanzen Z0 und Z2 sollen jeweils gleich dem komplexen Leitungswiderstand der Zweidrahtleitung 6 sein. Diese Impedanzen können, wie Figur 2a zeigt, als Reihenschaltung eines ohmschen Widerstands mit einer Parallelschaltung aus ohmschem und kapazitivem Widerstand aufgefasst werden. Die derzeit im Bereich der Deutschen Bundespost geforderten Werte sind in Fig. 2a eingetragen.

Bei der Erfindung wird nun der Serienteil der komplexen Impedanz Z2, der ein rein ohmscher Widerstand ist, durch die unvermeidlichen Verlustwiderstände des Übertragers 7 und durch ohnehin benötigte ohmsche Meßwiderstände gebildet. In Figur 1 ist der Übertrager 7 durch eine Sekundärwicklung 71, eine Primärwicklung 72 und einen in Reihe mit der Primärwicklung 72 liegenden Verlustwiderstand 73 dargestellt. Im Verlustwiderstand 73 ist auch der Verlust der Sekundärwicklung 71 berücksichtigt. In Reihe mit der Primärwicklung 72 und dem Verlustwiderstand 73 liegt ein Meßwiderstand 81 und der Ausgangskreis einer steuerbaren Stromquelle 3. Die Ausgangsimpedanz der steuerbaren Stromquelle 3 muß dann, nach Übersetzung auf die Sekundärseite des Übertragers 7, den Parallelteil der komplexen Impedanz Z2 bilden. Hierzu ist im Eingangsstromkreis der steuerbaren Stromquelle 3 eine komplexe Impedanz Z2ʹ enthalten. Diese komplexe Impedanz Z2ʹ besteht aus der Parallelschaltung eines ohmschen Widerstands und eines kapazitiven Widerstands. Die steuerbare Stromquelle 3 wird durch den durch die komplexe Impedanz Z2ʹ fliessenden Strom i angesteuert und gibt an ihrem Ausgang den mit der Übertragungskonstanten K multiplizierten Strom K·i ab. Die am Meßwiderstand 81 abgegriffene Spannung wird auf einen Eingang 36 der steuerbaren Stromquelle 3 rückgekoppelt. Die steuerbare Stromquelle 3 besteht, wie Figur 3 zeigt, aus einem Operationsverstärker 37, dessen Ausgang den Ausgang der steuerbaren Stromquelle bildet, dessen nicht invertierender Eingang geerdet ist und dessen invertierender Eingang einerseits den Steuereingang der steuerbaren Stromquelle 3 bildet, der mit der komplexen Impedanz Z2ʹ verbunden ist und der andererseits intern über einen Widerstand 38 mit dem Eingang 36 verbunden ist. Außer über den Meßwiderstand 81 und den Widerstand 38 ist die steuerbare Stromquelle auch noch über die Reihenschaltung eines Widerstandes 23, eines Verstärkers 2 und der komplexen Impedanz Z2ʹ rückgekoppelt. Der Verstärker 2 weist den Verstärkungsfaktor V auf. Bei der Bemessung der komplexen Impedanz Z2ʹ, die als Parallelteil der komplexen Impedanz Z2 wirkt, ist das Übersetzungsverhältnis des Übertragers 7, der Verstärkungsfaktor V des Verstärkers 2 und die Übertragungskonstante K der steuerbaren Stromquelle 3 berücksichtigt. Dies wird vorteilhaft so ausgenutzt, daß als kapazitiver Widerstand ein kleiner, handelsüblicher Kondensator verwendet werden kann. Beispielsweise wird ein Kondensator mit 1nF verwendet,der an der Zweidrahtleitung mit 115nF wirkt.

Am Ausgang des Verstärkers 2 kann gleichzeitig eine Spannung abgegriffen werden, die proportional dem Anteil ist, den eine von der Zweidrahtleitung 6 kommende Spannung am Parallelteil der komplexen Impedanz Z2 entstehen läßt. Diese wird über eine Gabel 5 auf eine Sendeleitung S weitergegeben. Der Ausgang des Verstärkers 2 ist hierzu über einen Widerstand 51 mit dem invertierenden Eingang eines Operationsverstärkers 54 verbunden. Der Ausgang des Operationsverstärkers 54 ist mit der Sendeleitung S und über einen Rückkopplungswiderstand 53 mit dem invertierenden Eingang verbunden. Über einen Widerstand 55 wird dem nichtinvertierenden Eingang eine Spannung zugeführt, die am Meßwiderstand 81 abgegriffen wird und die dem Anteil proportional ist, den eine von der Zweidrahtleitung 6 kommende Spannung am Serienteil der komplexen Impedanz Z2 entstehen läßt. Auf der Sendeleitung S ist damit wieder eine Spannung, die der gesamten von der Zweidrahtleitung kommenden Spannung entspricht. Außerdem ist in bekannter Weise zwischen den nichtinvertierenden Eingang und Masse ein Widerstand 56 eingefügt.

Ein von der Empfangsleitung E kommendes Signal gelangt über einen Widerstand 21 zum invertierenden Eingang des Verstärkers 2, von dessen Ausgang über die komplexe Impedanz Z2ʹ, zum Eingang der steuerbaren Stromquelle 3, von deren Ausgang zur Primärwicklung 72 des Übertragers 7 und von dessen Sekundärwicklung 71 zur Zweidrahtleitung 6.

In der Gabel 5 wird in bekannter Weise ein Teil des von der Empfangsleitung E kommenden Signals über einen Widerstand 52 dem vom Verstärker 2 kommenden Signal derart zuaddiert, daß sich insgesamt die auf verschiedenen Wegen von der Empfangsleitung E zur Sendeleitung S gelangenden Signale kompensieren.

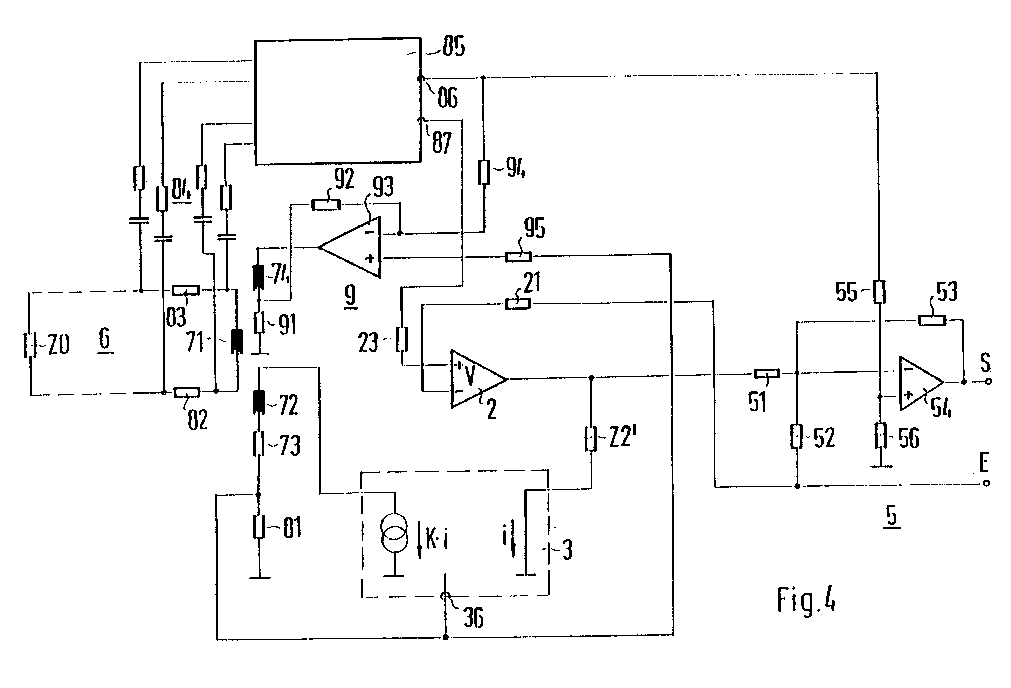

Figur 4 zeigt eine vorteilhafte Weiterentwicklung der Gabelschaltung nach Figur 1. Zwei Meßwiderstände 82 und 83 sind symmetrisch in die Zweidrahtleitung 6 eingefügt. Sie bilden zusammen den Serienteil der komplexen Impedanz Z2. Der Meßwiderstand 81 im Ausgangskreis der steuerbaren Stromquelle 3 wirkt sich hier, da er nun in der Rückkoppelschleife liegt, nicht auf den Serienteil der komplexen Impedanz Z2 aus. Da der Übertrager 7 ebenfalls in der Rückkoppelschleife liegt, wirken sich dessen nichtideale Eigenschaften nur sehr wenig aus. Dies ist beispielsweise dann von großer Bedeutung, wenn von der Zweidrahtleitung 6 her eine Rufspannung mit einer Frequenz von 16 kHz und großer Amplitude anliegt, weil sich dann die parasitären Elemente des Übertragers 7 schon deutlich bemerkbar machen.

An die Meßwiderstände 82 und 83 ist über ein Ankoppelnetzwerk 84 eine Meßschaltung 85 angekoppelt. Das Ankoppelnetzwerk 84 besteht pro Eingangsleitung aus einem Koppelkondensator und einem Widerstand. Die Meßschaltung 85 enthält zwei Meßverstäker, die einerseits an einem Ausgang 86 eine Spannung abgeben, die dem Strom auf der Zweidrahtleitung 6 proportional ist und andererseits an einem Ausgang 87 eine Spannung, die proportional der Spannung an der Sekundärwicklung 71 des Übertragers 7 und damit proportional der Spannung am Parallelteil der komplexen Impedanz Z2 ist. Diejenige Spannung, die dem Anteil am Parallelteil der komplexen Impedanz Z2 entspricht, wird am Ausgang 87 der Meßschaltung 85 abgegriffen und wie in der Schaltung nach Figur 1 über den Widerstand 23 dem nichtinvertierenden Eingang des Verstärkers 2 zugeführt.Der dem Anteil am Serienteil der komplexen Impedanz Z2 entsprechende Teil der Eingangsspannung wird am Ausgang 86 abgegriffen und wie in der Schaltung nach Figur 1 über den Widerstand 55 dem nichtinvertierenden Eingang des Operationsverstärkers 54 in der Gabel 5 zugeführt.

Die Tatsache, daß sowohl der Strom in der Sekundärwicklung 71 durch die Meßwiderstände 82 und 83 gemessen wird als auch der Strom durch die Primärwicklung 72 mittels des Meßwiderstands 81, wird noch zusätzlich ausgenutzt. In einer Induktivitätsvervielfacherschaltung 9 werden diese Ströme derart gewichtet voneinander subtrahiert, daß sich ein Signal ergibt, dessen Wert proportional der durch diese Ströme verursachten Durchflutung im Übertrager 9 ist. Hierzu wird der invertierende Eingang eines Operationsverstärkers 93 über einen Widerstand 94 mit dem Ausgang 86 der Meßschaltung 85 und der nichtinvertierende Eingang über einen Widerstand 95 mit demjenigen Abgriff des Meßwiderstands 81 verbunden, an dem ein dem Strom in der Primärwicklung 72 proportionales Signal anliegt. Der Ausgang des Operationsverstärkers 93 treibt einen Strom durch eine Hilfswicklung 74 des Übertragers 7, der die dort herrschende Durchflutung um einen vorgegebenen Faktor erhöht. Des entspricht der Erhöhung der Induktivität um den selben Faktor. Dadurch kann ein kleinerer Übertrager verwendet werden. Näheres hierzu kann den Offenlegungsschriften DE-OS 33 23 649 und DE-OS 33 23 651 entnommen werden. Der Strom durch die Hilfswicklung 74 wird in einem Widerstand 91 gemessen und durch einen Widerstand 92 abgegriffen und dem invertierenden Eingang des Operationsverstärkers 93 zugeführt.

Die Meßschaltung 85 könnte auch so aufgebaut sein, daß am Ausgang 86 eine Spannung abgegeben wird, die proportional der gesamten Eingangsspannung ist, d.h. der Spannung an der gesamten komplexen Impedanz Z2 proportional. Mittels der Operationsverstärker 54 und 93 müßten dann noch die Differenzen der Spannungen an den Ausgängen 86 und 87 gebildet werden, um den Ausgangsstrom zu erfassen. Prinzipielle Änderungen ergäben sich dadurch nicht.

## Patentansprüche

1. Analoge elektronische Gabelschaltung mit komplexem Innenwiderstand (Z2) zum impedanzangepaßten Anschluß einer bidirektionalen Zweidrahtleitung (6) an eine unidirektionale Empfangsleitung (E) und eine unidirektionale Sendeleitung (S); mit einem Verstärker (2), dessen Eingängen das von der bidirektionalen Zweidrahtleitung (6) kommende Signal und das von der Empfangsleitung (E) kommende Signal zugeführt wird und dessen Ausgang einerseits mit der unidirektionalen Sendeleitung (S) und andererseits über eine komplexe Impedanz (Z2') mit dem Eingang einer steuerbaren Stromquelle (3) verbunden ist, deren Ausgangsstrom der bidirektionalen Zweidrahtleitung (6) zugeführt wird, **dadurch gekennzeichnet,** daß die Zweidrahtleitung (6) mit einem Übertrager (7) abgeschlossen ist, daß in Reihe mit dem Übertrager (7) ein ohmscher Meßwiderstand (81, 82, 83) eingefügt ist, daß die komplexe Impedanz (Z2') als Parallelschaltung aus einem kapazitiven und einem ohmschen Widerstand gebildet ist und daß der ohmsche Meßwiderstand (81, 82, 83) so bemessen ist, daß er unter Berücksichtigung des Verstärkungsfaktors (V) des Verstärkers (2), dem Übersetzungsverhältnis des Übertragers (7) und der Übertragungskonstanten (K) der steuerbaren Stromquelle (3) zusammen mit der komplexen Impedanz (Z2') und den Verlustwiderständen des Übertragers (7) den komplexen Innenwiderstand (Z2) ergibt.

2. Gabelschaltung nach Anspruch 1, dadurch gekennzeichnet, daß der Meßwiderstand (81) auf der von der Zweidrahtleitung (6) abgewandten Seite des Übertragers (7) in den Ausgangsstromkreis der steuerbaren Stromquelle (3) eingefügt ist.

3. Gabelschaltung nach Anspruch 1, dadurch gekennzeichnet, daß der Meßwiderstand (82, 83) in die Zweidrahtleitung (6) eingefügt ist.

## Claims

1. An analog electronic hybrid circuit with a complex internal impedance (Z2) for connecting a bidirectional two-wire line (6) to a unidirectional receive line (E) and a unidirectional transmit line (S) so as to obtain an impedance match, comprising an amplifier (2) whose inputs are fed with the signal coming from the bidirectional two-wire line (6) and the signal coming from the receive line (E), and whose output is connected to the unidirectional transmit line (S) and, through a complex impedance (Z2'), to the input of a controlled current source (3) whose output current is supplied to the bidirectional two-wire line (6), **characterized in** that the two-wire line (6) is terminated with a transformer (7), that a measuring resistor (81, 82, 83) is connected in series with the transformer (7), that the complex impedance (Z2') is formed by a parallel combination of a capacitance and a resistance, and that, taking into account the gain (V) of the amplifier (2), the transformation ratio of the transformer (7), and the transfer constant (K) of the controlled current source (3), the value of the measuring resistor (81, 82, 83) is chosen so that it combines with the complex impedance (Z2') and the loss resistances of the transformer (7) to give the complex internal impedance (Z2).

2. A hybrid circuit as claimed in claim 1, characterized in that the measuring resistor (81) is inserted in the output circuit of the controlled current source (3) on that side of the transformer (7) which is not connected to the two-wire line (6).

3. A hybrid circuit as claimed in claim 1, characterized in that the measuring resistor (82, 83) is inserted in the two-wire line (6).

## Revendications

1. Circuit électronique analogique hybride muni d'une résistance interne complexe (Z2) pour le raccordement avec adaptation d'impédance d'une ligne bidirectionnelle à deux fils (6) sur une ligne unidirectionnelle de réception (E) et sur une ligne unidirectionnelle d'émission (S); avec un amplificateur (2) dont les entrées reçoivent le signal provenant de la ligne bidirectionnelle à deux fils (6) et le signal provenant de la ligne de réception (E) et dont la sortie est reliée, d'une part, à la ligne unidirectionnelle d'émission (S) et, d'autre part, à l'entrée d'une source de courant réglable (3) via une impédance complexe (Z2'), le courant de sortie de ladite source étant appliqué à la ligne bidirectionnelle à deux fils (6), caractérisé en ce que la ligne à deux fils est fermée par un transformateur (7), en ce qu'une résistance ohmique de mesure (81, 82, 83) est raccordée en série avec le transformateur (7), en ce que l'impédance complexe (Z2') est composée d'un circuit parallèle comprenant une résistance capacitive et une résistance ohmique, et en ce que la résistance ohmique de mesure (81, 82, 83) a une valeur telle qu'elle donne la résistance interne complexe (Z2) en prenant en compte le facteur d'amplification (V) de l'amplificateur (2), le rapport de transformation du transformateur (7) et les constantes de transfert (K) de la source de courant réglable (3) en combinaison avec l'impédance complexe (Z2') et les résistances de perte du transformateur (7).

2. Circuit hybride selon la revendication 1, caractérisé en ce que la résistance de mesure (81) est insérée, du côté opposé, à la ligne à deux fils (6) du transformateur (7), dans le circuit du courant de sortie de la source de courant réglable (3).

3. Circuit hybride selon la revendication 1, caractérisé en ce que la résistance de mesure (82, 83) est insérée dans la ligne à deux fils (6).
